# FASCICULE DE BREVET EUROPEEN

(11) **EP 4 612 051 B1**
(45) Date de publication et mention de la délivrance du brevet: **09.09.2026**
(21) Numéro de dépôt: 23829026.6
(22) Date de dépôt: 12.12.2023
(51) Int. Cl.: B64C 13/04, B64C 13/22, B64C 13/34

(54) **ACTIONNEUR DE COMMANDE MECANIQUE POUR UN AERONEF**
MECHANISCHE BETÄTIGUNGSVORRICHTUNG FÜR EIN LUFTFAHRZEUG
MECHANICAL CONTROL ACTUATOR FOR AN AIRCRAFT

(30) Priorité: 14.12.2022 FR 2213352
(43) Date de publication de la demande: 10.09.2025
(73) Titulaire: THALES, 92190 Meudon (FR)
(72) Inventeur: BOURLAND, Jean-Claude, 86101 CHATELLERAULT (FR); SIMON-BOUHET, Gérard, 86101 CHATELLERAULT (FR); THOUVENOT, Gilles, 26027 VALENCE CEDEX (FR)
(74) Mandataire: Atout PI Laplace
(86) Numéro de dépôt international: PCT/EP2023/085441
(87) Numéro de publication internationale: WO 2024/126525

(56) Documents cités:
- US-A1- 2005 173 595
- US-A1- 2017 259 915
- US-A1- 2018 197 385
- US-A1- 2020 369 374
- US-B1- 6 325 331

## Description

### Domaine technique

La présente invention concerne un actionneur de commande mécanique de vol destiné à fournir une assistance à des moyens de pilotage d'un aéronef. Le domaine technique est donc celui des commandes de vol mécaniques en aéronautique et des actionneurs réalisant un retour d'effort sur manche ou pédale, en particulier, pour un hélicoptère.

### Technique antérieure

Dans un système AFCS ( pour « Automatic Flight Control System » en anglais), un hélicoptère est piloté grâce à des équipements contrôlant et réalisant le déplacement de la tringlerie (« Flight Path » ou « linkage » en anglais), en prise avec les gouvernes ou les surfaces de vol, suivant le gabarit d'hélicoptères via amplification de puissance, par exemple, par des valves hydrauliques. Le pilotage peut être complétement automatique à l'aide d'algorithmes de guidage d'une part et de stabilisation pour les qualités de vol d'autre part, un pilotage semi-automatique avec une action manuelle conjointe sur le manche/pédales ou désengagé et en pilotage manuel.

Dans un hélicoptère l'avionique contrôle les quatre axes de pilotage Roulis/Tangage/Lacet et le pas collectif. Une architecture classique AFCS comprend pour actionner la course de déplacement de la tringlerie des actionneurs série linéaires à faible autorité et forte vélocité dédiés à la stabilisation de vol et des actionneurs rotatifs en parallèle de compensation (dit «Trim» en anglais) rotatifs en parallèle à forte autorité, faible vélocité qui, de plus, réalisent un retour d'effort en pilotage manuel.

Dans une architecture réduite, des actionneurs de compensation à plus haute vitesse et bande-passante permettent d'envisager des fonctions de stabilité en secours ou lors de performances dégradées de contrôle de vol.

Dans l'ancienne génération de compensation électromécanique, en pilotage manuel, loi d'effort activée, les actionneurs requéraient une friction passive qui était réalisée par des dispositifs mécaniques dans la tringlerie de l'hélicoptère (patin sur tringlerie, par exemple sur axe collectif).

La friction de l'hélicoptère comprend une partie inhérente à la tringlerie (assez limitée suivant l'hélicoptère comprise entre 0.5 à 3 Nm voire 5 Nm sur certains axes et type d'hélicoptères) et le réglage de la compensation consiste en une pré-charge de l'ordre de la friction de tringlerie pour le confort pilote en pilotage manuel et légèrement au-delà avec une marge pour se prémunir de désengagement intempestif du Pilote Automatique. Selon le type d'hélicoptères et les axes, il peut y avoir en plus besoin d'un dispositif localisé de friction typiquement jusqu'à de l'ordre de 6 Nm.

Dans cette configuration, une friction passive de secours dans la tringlerie devient une limitation de par sa variabilité (sous facteur de charge, usure), et devient un inconvénient pour maitriser une loi d'effort prédéterminée en fonctionnement nominal. En outre, pour une loi d'effort motorisée, on cherche une réversibilité maximale pour un ressenti d'arbre libre et pour restituer précisément et fidèlement (non-linéarités) dans tout le domaine de vol une loi d'effort adaptable en vol.

Les patins dans la tringlerie restent des dispositifs sujets à usure, constamment sollicités et donc difficiles à gérer par rapport à la suite avionique AFCS. Cela conduit à des contrôles périodiques et à des re-calibrations.

De tels actionneurs sont notamment divulgués dans le document US5184054 et dans le document US6325331.

Le document US20180197385 mentionne, quant à lui, l'utilisation d'un actionneur de compensation permettant une friction passive insérée dans un module au niveau de l'arbre de sortie ou localisée dans la tringlerie. Cette solution conduit cependant à un volume significatif : typiquement un frein/embrayage assumant des efforts de 20 Nm nécessite un volume de 80 diamètre x 45 mm longueur soit 16% de volume compact d'actionneur visé et avec une masse de 700 g, soit 35% de la masse globale visée de 2 kg de l'actionneur.

US2017/259915A1 décrit un actionneur de commande mécanique de vol.

En outre, la puissance mécanique de friction en sortie d'actionneur serait significative pour le dimensionnement de friction et pour le débrayage de cette fonction qui doit passer les efforts/la cinématique de l'actionneur.

Il existe donc un besoin de proposer un actionneur de commande mécanique pour un actionneur permettant une fonction secours optimisée (friction, amortissement visqueux) tout en ayant une grande compacité.

### Exposé de l'invention

La présente invention vise à remédier au moins en partie à ce besoin.

Plus particulièrement, la présente invention a pour objectif de proposer un actionneur de commande mécanique à haute intégrité apte à délivrer un retour d'effort au pilote par contrôle intégré de sa motorisation.

Pour cela un premier objet de l'invention concerne un actionneur de vol destiné à fournir une assistance à des moyens de pilotage d'un aéronef. Ledit actionneur de vol comprenant :
- un moteur électrique ;
- un arbre d'entrée adapté pour être mis en rotation par le moteur électrique, ledit arbre d'entrée comprenant un dispositif d'embrayage d'entrée, ledit dispositif d'embrayage d'entrée ayant une position active dans laquelle il est apte à coupler l'arbre d'entrée avec un arbre de sortie et une position inactive ;
- l'arbre de sortie est apte à être relié aux moyens de pilotage de l'aéronef, ledit arbre de sortie étant adapté pour être couplé avec l'arbre d'entrée lorsque le dispositif d'embrayage d'entrée est dans la position active.
L'actionneur comprend :
- un arbre d'assistance de secours, ledit arbre d'assistance étant adapté pour être couplé avec l'arbre de sortie lorsque le dispositif d'embrayage d'entrée est dans la position inactive, ledit arbre d'assistance de secours étant apte à freiner et/ou à amortir des mouvements de rotation de l'arbre de sortie, ledit arbre d'assistance de secours n'étant pas apte à entraîner en rotation l'arbre de sortie.

L'invention consiste en une nouvelle fonction de secours de friction ajustable et d'amortissement visqueux de type M = C. *θ̇*(dispositifs passifs) avec la particularité d'un dispositif appliqué sélectivement grâce à un embrayage d'entrée et un arbre d'assistance de secours adapté pour agir sur l'arbre de sortie lorsque le dispositif d'embrayage d'entrée est dans une position inactive. Un tel actionneur permet une forte compacité car ce dispositif est conçu dans une partie amont de la transmission de l'équipement avec un couple maximum limité sur l'arbre auquel l'unité est activable. En fonctionnement nominal le retour d'effort actif est assuré par asservissement en couple du moteur et estimation du couple résistant sur l'arbre de sortie, ce qui permet de restituer un retour tactile en dynamique avec un couple et un amortissement. L'arbre intermédiaire est apte à réaliser ou à porter un train d'engrenages pour coupler l'arbre d'entrée avec l'arbre de sortie. Dans une configuration mécanique complète, l'arbre d'assistance de secours est apte à freiner et à amortir des mouvements de rotation de l'arbre de sortie. Dans une configuration réduite au montage, l'arbre d'assistance de secours est apte à freiner ou à amortir des mouvements de rotation de l'arbre de sortie. Lorsque l'arbre d'assistance de secours n'est pas apte à entraîner en rotation l'arbre de sortie, l'assistance de secours est passive et elle n'est pas apte à entraîner la rotation de l'arbre de sortie. On perd alors la motorisation. La rotation de l'arbre de sortie n'est plus induite que par le pilote et les réactions aérodynamiques (rotations externes à l'actionneur). La notion d'assistance est assurée par la fonction principale, en nominal, par exemple, lorsqu'il n'y a pas de détection d'erroné par une unité de monitoring. Ceci permet de conserver le dispositif d'embrayage d'entrée 112 embrayé.

Dans un mode de réalisation particulier, l'arbre d'assistance de secours comprend un dispositif d'embrayage d'assistance de secours. Ce dispositif d'embrayage d'assistance de secours a une position active dans laquelle il permet l'entraînement de l'arbre de sortie et une position inactive. Le dispositif d'embrayage d'assistance de secours est dans sa position active lorsque le dispositif d'embrayage d'entrée est dans sa position inactive et ledit dispositif d'embrayage d'assistance de secours est dans sa position inactive lorsque le dispositif d'embrayage d'entrée est dans sa position active.

La fonction de secours de friction ajustable et d'amortissement est appliquée sélectivement grâce à un premier embrayage porté par l'arbre d'entrée et à un second embrayage porté par l'arbre d'assistance de secours. Les fonctionnements de ces embrayages sont coordonnés.

Dans un mode de réalisation particulier, une défaillance du moteur électrique rend inactif le dispositif d'embrayage d'entrée et rend active le dispositif d'embrayage d'assistance de secours. Ceci est rendu possible par une unité de monitoring adaptée pour détecter les défaillances. Ainsi, une défaillance du moteur électrique est détectée par l'unité de monitoring qui commande le dispositif d'embrayage à deux embrayages, en rendant inactif le dispositif d'embrayage d'entrée et en rendant actif le dispositif d'embrayage d'assistance de secours.

En cas de détection d'erroné, l'actionneur mécanique commute en quelques dizaines de millisecondes la charge de l'arbre de sortie en configuration « fail-safe » entre l'arbre motorisé et l'arbre du dispositif passif de friction/amortissement. Commuter une charge (arbre d'assistance de secours) est favorable en ressenti grâce à l'amortissement du transitoire de couple. De plus, l'amortissement sur l'arbre d'assistance de secours joue favorablement sur l'arbre d'entrée moteur qui aurait transitoirement une vitesse établie ou résiduelle après passivation par l'unité monitoring, par exemple, lors d'une coupure 28V par un « circuit de breaker » sur le point de puissance.

Dans un mode de réalisation particulier, le dispositif d'embrayage d'entrée et le dispositif d'embrayage d'assistance de secours sont commandés électriquement. Cette commande électrique est commune pour les aspects « safety » et avec la particularité de dispositifs de commutation automatique d'arbre avec un dispositif de double-embrayage complémentaire avec trois arbres. Ceci permet une très haute intégrité avec une double surveillance électronique et physique de rotation de l'arbre d'assistance de secours. De plus, les dispositifs d'embrayage sont commandés électriquement par un discret sécurisé FDR (pour « Force Drive Release » en anglais).

Dans un mode de réalisation particulier, l'arbre d'assistance de secours comprend un dispositif de freinage et/ou un dispositif d'amortissement. Dans une architecture « fail-safe », des dispositifs sont désélectionnés en cas de fonctionnement nominal pour supprimer tout effort parasite et avec la réalisation d'une assistance active par le contrôle moteur. L'assistance de secours est appliquée sélectivement. L'actionneur de commande permet une disponibilité très élevée du dispositif de double-embrayage. La conception de cet actionneur en amont de la transmission entre le pignon du moteur et le train d'engrenage en aval améliore le rapport masse/volume.

Dans un mode de réalisation particulier, le dispositif de freinage comprend un frein à friction à disque, ledit frein étant taré au moyen de rondelles ressort. Ces rondelles ressort sont de type rondelles ressort Belleville. Le dispositif de freinage est ainsi ajustable en maintenance.

Dans un mode de réalisation particulier, le dispositif de freinage comprend un système de réglage du tarage des disques de frein.

Dans un mode de réalisation particulier, le système de réglage comprend un dispositif de renvoi. Ce dispositif de renvoi est disposé sur la face avant la plus accessible de l'actionneur dans l'installation de l'aéronef, c'est-à-dire côté arbre de sortie.

Dans un mode de réalisation particulier, le dispositif d'amortissement comprend un amortisseur à courant de Foucault.

Dans un mode de réalisation particulier, l'actionneur de vol comprend un arbre intermédiaire disposé entre l'arbre d'entrée, l'arbre d'assistance de secours et l'arbre de sortie. Ceci permet d'atteindre un objectif de compacité en volume/masse de l'unité passive d'assistance conçue entre l'étage de réduction amont du moteur et le train d'engrenage aval.

Dans un mode de réalisation particulier, l'actionneur de commande comprend une double surveillance électronique et physique de rotation de l'arbre d'assistance de secours.

Un autre objet de l'invention concerne un système de contrôle de vol automatique d'un aéronef comprenant un actionneur de commande mécanique de vol comportant un arbre d'assistance de secours, ledit arbre d'assistance de secours étant adapté pour être couplé avec l'arbre de sortie lorsque le dispositif d'embrayage d'entrée est dans la position inactive. L'arbre d'assistance est apte à freiner et/ou à amortir des mouvements de rotation de l'arbre de sortie, ledit arbre d'assistance de secours n'étant pas apte à entraîner en rotation l'arbre de sortie.

La présente invention sera mieux comprise à la lecture de la description détaillée de modes de réalisation pris à titre d'exemples nullement limitatifs et illustrés par les dessins annexés sur lesquels :
[Fig 1] la figure 1 illustre un système de contrôle de vol automatique d'un aéronef comprenant un actionneur de commande mécanique de vol selon l'invention en prise sur la tringlerie ;
[Fig 2] la figure 2 illustre schématiquement l'actionneur de commande mécanique de vol de la figure 1 ;
[Fig 3] la figure 3 illustre de manière plus détaillée une partie de l'actionneur de commande mécanique de vol de la figure 2 ;
[Fig 4] la figure 4 illustre schématiquement un dispositif de freinage et un dispositif d'amortissement de l'actionneur de commande mécanique de vol de la figure 3 ;
[Fig 5] la figure 5 illustre schématiquement des moyens de réglage sur l'arbre d'assistance de secours de la figure 4, selon une première variante ;
[Fig 6] la figure 6 illustre schématiquement des moyens de réglage sur l'arbre d'assistance de secours de la figure 4, selon une seconde variante.

L'invention n'est pas limitée aux modes de réalisation et variantes présentées et d'autres modes de réalisation et variantes apparaîtront clairement à l'homme du métier.

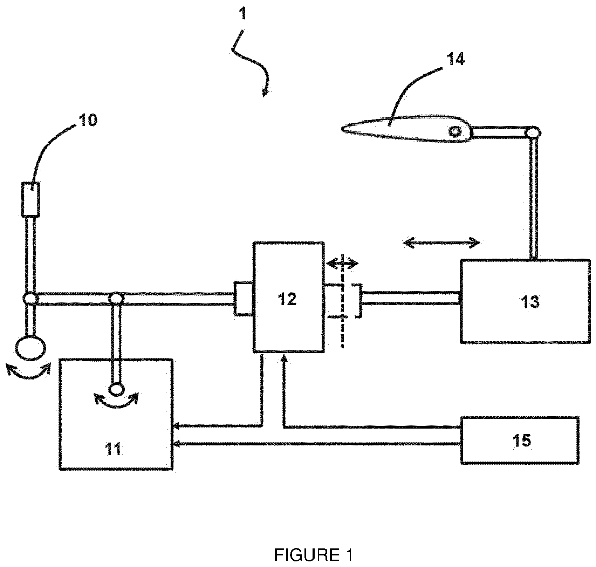

La figure 1 illustre un système de contrôle de vol automatique 1 d'un aéronef.

Le système de contrôle de vol automatique 1 comprend :
- un manche de commande 10 ;
- un actionneur de commande mécanique de vol 11 ;
- un actionneur linéaire 12 ;
- un actionneur hydraulique 13 ;
- une surface de vol pilotable 14 ;
- un calculateur de bord 15 ou « Flight Control Computer FCC ».

Le manche de commande 10 est utilisé pour être pris en main par le pilote. Ce manche 10 permet de commander l'ensemble de la tringlerie de l'aéronef.

L'actionneur de commande mécanique de vol 11 est adapté pour apporter un retour d'effort au manche de commande 10. Cet actionneur de commande mécanique de vol 11 est ici un actionneur rotatif parallèle. Il permet ainsi de restituer précisément dans le domaine de vol une loi d'effort adaptable en vol. Cette loi d'effort est fonction de débattement angulaire du manche de commande 10. C'est une loi d'effort digitable adaptable en vol. Dans ce mode de restitution d'effort au pilote, cet actionneur permet ainsi d'assister le pilote dans ses opérations de commande. Dans un second mode « autotrim » l'actionneur de commande mécanique de vol 11 est apte à recevoir des commandes de déplacement provenant de l'actionneur linéaire 12 et du calculateur de bord 15.

L'actionneur linéaire 12 est couplé dans la tringlerie en série en prise avec l'actionneur ou l'amplificateur hydraulique 13 qui pousse la surface de vol pilotable 14. L'actionneur linéaire crée ainsi un mouvement linéaire sur une course d'ordre du mm à quelques centaines de mm. L'actionneur linéaire 12 reçoit des commandes de position et il renvoie la position courante vers le calculateur de bord 15 qui peut être en charge des algorithmes de PA. Dans une variante, les algorithmes de PA sont implémentés dans le processeur de l'actionneur linéaire 12. Ainsi, l'actionneur linéaire est adapté pour transformer une commande du pilote en un ordre particulier à destination de l'actionneur hydraulique 13. Plus particulièrement, l'actionneur linéaire 12 est adapté pour créer un mouvement en ligne droite. Il reçoit des données du calculateur de bord 15.

L'actionneur hydraulique 13 est apte à recevoir une information de l'actionneur linéaire 12 dans le but de commander la surface de vol pilotable 14. Pour le contexte des commandes vol mécanique (par opposition aux commandes vol électrique) l'actionneur hydraulique 13 amplifie la force/déplacement sur la course de l'actionneur linéaire 12 dans le but de commander ou déplacer la surface de vol pilotable 14. L'actionneur hydraulique 13 est, par exemple, un vérin hydraulique.

La surface de vol pilotable 14 est déplacée pour piloter le vol de l'aéronef. Le pilotage de cette surface de vol pilotable 14 participe à la stabilisation de l'aéronef (quatre axes de pilotage sur un hélicoptère). La surface de vol pilotable 14 est ainsi adaptée pour influencer le mouvement de l'aéronef. Elle permet une interaction entre l'air extérieur et l'aéronef. Cette surface de vol pilotable 14 est ici pilotée autour d'un axe de rotation X.

Le calculateur de bord 15 est adapté pour contrôler le vol de l'aéronef (fonction Pilote Automatique). Il agit pour cela sur la commande de l'actionneur rotatif parallèle (actionneur de commande mécanique de vol 11) et sur l'actionneur linéaire 12.

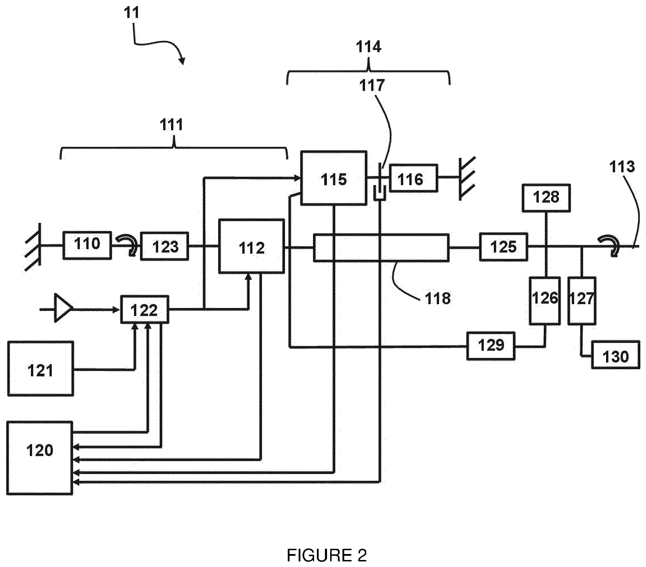

La figure 2 illustre schématiquement l'actionneur de commande mécanique de vol 11 de la figure 1. Cet actionneur de commande mécanique de vol 11 comprend :
- un moteur électrique 110 ;
- un arbre d'entrée 111 ;
- un dispositif d'embrayage d'entrée 112 ;
- un arbre de sortie 113 ;
- un arbre d'assistance de secours 114 ;
- un dispositif d'embrayage d'assistance de secours 115 ;
- un dispositif de freinage 116 ;
- un dispositif d'amortissement 117 ;
- un arbre intermédiaire 118 ;
- un dispositif de monitoring 120 ;
- un dispositif de commande 121 ;
- un dispositif d'une opération logique 122 ;
- un engrenage 123 ;
- un dispositif de protection 125 ;
- un premier détecteur 126 ;
- un second détecteur 127 ;
- un troisième détecteur 128 ;
- un quatrième détecteur 129 ;
- un cinquième détecteur 130.

Le moteur électrique 110 est adapté pour mettre en rotation l'arbre d'entrée 111. Ce moteur 110 est ici un moteur à courant continu sans balais qui présente une grande fiabilité et qui permet un compromis optimisé en termes de densité électromagnétique et de caractéristiques d'inertie et de couple de « cogging ».

L'arbre d'entrée 111 est adapté pour être mis en rotation par le moteur 110 par l'intermédiaire de l'engrenage 123. Cet arbre d'entrée 111 comprend le dispositif d'embrayage d'entrée 112 que l'on peut dénommer également embrayage EM1. Ce dispositif d'embrayage 112 peut prendre une position active dans laquelle il couple l'arbre d'entrée 111 avec l'arbre de sortie 113 via l'arbre intermédiaire 118 qui porte un train d'engrenages. Le dispositif d'embrayage d'entrée 112 peut prendre une position inactive dans laquelle il ne couple pas l'arbre d'entrée 111 avec l'arbre de sortie 113. Le dispositif d'embrayage d'entrée 112 est à friction/glissement.

L'arbre de sortie 113 est adapté pour être couplé avec l'arbre d'entrée 111 lorsque le dispositif d'embrayage d'entrée 112 est actif via l'arbre intermédiaire qui porte un train d'engrenages. Lorsque ce dispositif d'embrayage d'entrée 112 est inactif, l'arbre de sortie 113 est freiné et/ou amorti par le dispositif de freinage 116 et/ou le dispositif d'amortissement 117 appartenant à l'arbre d'assistance de secours 114.

L'arbre d'assistance de secours 114 est adapté pour freiner et/ou amortir des mouvements de rotation de l'arbre de sortie 113, selon la configuration mécanique montée. Cet arbre d'assistance de secours 114 comprend le dispositif d'embrayage d'assistance de secours 115, le dispositif de freinage 116 et/ou le dispositif d'amortissement 117.

Le dispositif d'embrayage d'assistance de secours 115 est adapté pour coupler l'arbre d'assistance de secours 114 avec l'arbre de sortie 113. Ce dispositif d'embrayage d'assistance de secours 115 a une position active dans laquelle il permet de coupler l'arbre d'assistance de secours 114 avec l'arbre de sortie 113. Le dispositif d'embrayage d'assistance de secours 115 a également une position inactive dans laquelle l'arbre d'assistance de secours 114 et l'arbre de sortie 113 ne sont pas couplés. Le dispositif d'embrayage d'assistance de secours 115 est dans sa position active lorsque le dispositif d'embrayage d'entrée 112 est dans sa position inactive et ledit dispositif d'embrayage d'assistance de secours 115 est dans sa position inactive lorsque le dispositif d'embrayage d'entrée 112 est dans sa position active. Le dispositif d'embrayage d'entrée 112 et le dispositif d'embrayage d'assistance de secours 115 sont donc à logique complémentaire.

Le dispositif d'embrayage d'assistance 112 est à friction/glissement. En variante, ce dispositif d'embrayage d'assistance 112 utilise une technologie à crabot.

Une défaillance du moteur électrique rend inactif le dispositif d'embrayage d'entrée 112 et rend actif le dispositif d'embrayage d'assistance de secours 115. On notera également que le dispositif d'embrayage d'entrée 112 et le dispositif d'embrayage d'assistance de secours 114 sont commandé électriquement via l'utilisation de bobines. Le dispositif d'embrayage d'entrée 112 est à appel de courant, ce qui nécessite, par exemple, l'application d'une tension de 28V dans la bobine dudit dispositif pour le rendre actif. Le dispositif d'embrayage d'assistance de secours 115 est à manque de courant. Ce dispositif est donc actif en absence d'alimentation dans la bobine de ce dispositif.

Le dispositif de freinage 116 est adapté pour freiner l'arbre de sortie 113 dans sa rotation, lorsque le dispositif d'embrayage d'assistance de secours 115 est actif. Ce dispositif de freinage 116 est un dispositif de freinage passif. Avantageusement, le dispositif de freinage 116 est un dispositif à friction ajustable.

Le dispositif d'amortissement 117 est adapté pour amortir les à-coups lors de transitoire de dynamique induit par la tringlerie (effet aérodynamique sur les surfaces de vol pilotable). Le dispositif d'amortissement 117 est un dispositif d'amortissement passif. Avantageusement, le dispositif d'amortissement 117 est un dispositif visqueux, par exemple, un dispositif dans lequel le couple de résistance est proportionnel à la vitesse angulaire de l'arbre porté.

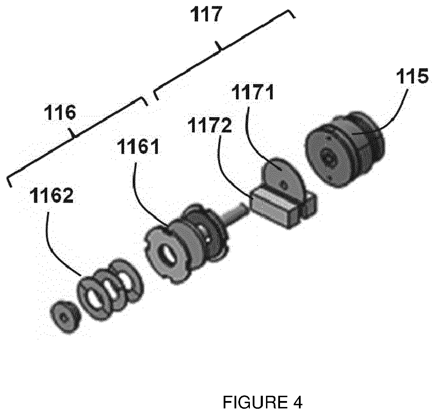

Le dispositif de freinage 116 et le dispositif d'amortissement 117 sont notamment illustrés à la figure 4. Le dispositif de freinage 116 comprend ici un frein à friction à disques 1161 taré au moyen de rondelles ressort 1162. Ces rondelles ressort 1162 assurent une force d'appui ajustable comprise entre 0 et 6 Nm.

Le dispositif d'amortissement 117 est de type à courant de Foucault et comportent un disque 1171 métallique tournant dans ou devant un circuit magnétique 1172. L'ajustement de l'aimantation du circuit magnétique 1172 est accessible par duplication d'aimants, par une augmentation de la surface interceptée du disque 1171 en rotation, par un traitement du disque 1171, ce qui permet un facteur d'augmentation de l'ordre de 30. En variante, il est possible de remplacer les aimants par un bobinage alimenté avec une capacité d'augmentation de l'amortissement d'un facteur 60. Le dispositif d'amortissement 117 permet un amortissement dans la gamme 1,5 à 4,5 Nm/rad/s au niveau de l'arbre de sortie 113.

L'actionneur de commande mécanique de vol (actionneur rotatif parallèle) 11 comprend également l'arbre intermédiaire 118. Cet arbre intermédiaire 118 est disposé entre l'arbre d'entrée 111, l'arbre d'assistance de secours 114 et l'arbre de sortie 113. Cet arbre intermédiaire 118 est adapté pour relier mécaniquement l'arbre d'entrée 111 avec l'arbre de sortie 113 ou pour relier mécaniquement l'arbre d'assistance de secours 114 avec l'arbre de sortie 113. Cet arbre intermédiaire est adapté pour porter un train d'engrenages qui permet de réaliser un rapport de réduction.

L'actionneur de commande mécanique de vol 11 comprend le dispositif de monitoring 120. Le dispositif de monitoring 120 assure le suivi de la chaîne de commande de la transmission et le contrôle de deux dispositifs d'embrayage complémentaires en forçant le désembrayage du dispositif d'embrayage d'entrée et l'embrayage de secours en cas de détection d'erroné sur la chaîne moteur et de transmission. En cas de détection d'erroné par le dispositif de monitoring 120, le système compact commute en quelques dizaines de millisecondes la charge de l'arbre de sortie en configuration « fail-safe » entre l'arbre motorisé et l'arbre du dispositif passif de friction/amortissement. Ce dispositif de monitoring 120 est adapté pour transmettre un signal de commande aux dispositifs d'embrayage complémentaires. Ce dispositif de monitoring 120 inclut « HW elec » et « SW ».

Le dispositif de commande 121 est adapté pour commander des tensions/courant dans les bobines appartenant au dispositif d'embrayage d'entrée 112 et au dispositif d'embrayage d'assistance de secours 115. Plus particulièrement, ce dispositif de commande 121 assure la supervision des modes de l'actionneur et le contrôle de haut-niveau de l'actionneur ainsi que le contrôle Haute-Fréquence moteur (boucles d'asservissement).

Le dispositif d'une opération logique 122 permet de réaliser une opération logique de type OR. Ce dispositif 122 est ainsi adapté pour recevoir un signal FDR (pour « Force Drive release »), et des signaux provenant du dispositif de monitoring 120 et potentiellement du dispositif de commande 121. Ce dispositif 122 est adapté pour délivrer des signaux à destination du dispositif d'embrayage d'entrée 112 et du dispositif d'embrayage d'assistance de secours 115.

Le dispositif de protection 125 comprend un limiteur de couple ou fusible sur l'arbre de sortie 113. Ce dispositif 125 permet de protéger la chaîne mécanique jusqu'à la sortie de l'arbre de sortie 113 en cas de défaillance même très improbable liés aux composants électromécaniques et roulement de la transmission conduisant à un blocage dudit arbre de sortie 113.

Un dispositif de surveillance comprend un premier détecteur 126, un second détecteur 127, un troisième détecteur 128, un quatrième détecteur 129, un cinquième détecteur 130. Ces détecteurs permettent, notamment, de surveiller la rotation de l'arbre de sortie 113. Ces détecteurs sont, par exemple, des détecteurs à effet Hall en vis-à-vis d'un aimant monté sur un disque à proximité. C'est sur le principe d'un assemblage d'un réducteur ou tout autre moyen de couplage de type soufflet dans l'axe de l'arbre de sortie 113, pour coupler un capteur de position/vitesse. On notera que le troisième détecteur 128 est typiquement un capteur de vitesse indépendant.

On notera également que le système est conçu pour une « safety » maximale permettant une forte intégrité de la classe Catastrophique (réglementaire selon CS-29, CS-25 à la probabilité 10-9/FH) ou mieux pour un cas de détection d'erroné de loi d'effort inférieure à l'attendu ou excessive avec impossibilité de passivation . En effet, le circuit commun de commande par l'unité de Monitoring (unité indépendante et ségréguée) contrôle les bobines des deux embrayages. Le procédé est en outre surveillé par acquisition de signal courant/tension de chacune des bobines. De façon particulière, au-delà de cette surveillance, l'invention permet de détecter un défaut potentiel d'embrayage de l'unité passive, qui conduirait à une surcharge sur la chaine motorisée liée à cette friction embrayée de façon erronée. La détection est réalisée par une mesure robuste de vitesse par l'unité de Monitoring via une détection à cellule à effet Hall en vis-à-vis d'aimant sur disque. Au-delà d'une surveillance courant/tension de l'étage de commande des deux embrayages, l'invention intègre une surveillance particulière de rotation pour garantir que l'unité de friction/amortissement n'est pas embrayée anormalement avec rotation de son axe en relation avec la rotation de l'arbre amont côté moteur. Le dispositif de monitoring 120 surveille la logique de commutation du double-embrayage et détecte par deux circuits de mesure différents la cohérence d'état des deux embrayages.

On notera enfin que l'électronique est ici adaptée pour permettre de réaliser un autotest de la voie de motorisation, en utilisant la voie de secours de friction pour charger la motorisation de la voie principale. Dans une maintenance prédictive, cela permet de calibrer la transmission amont/motorisation sur la charge prédéfinie et d'identifier un modèle équivalent moteur chargé et d'éventuel vieillissement.

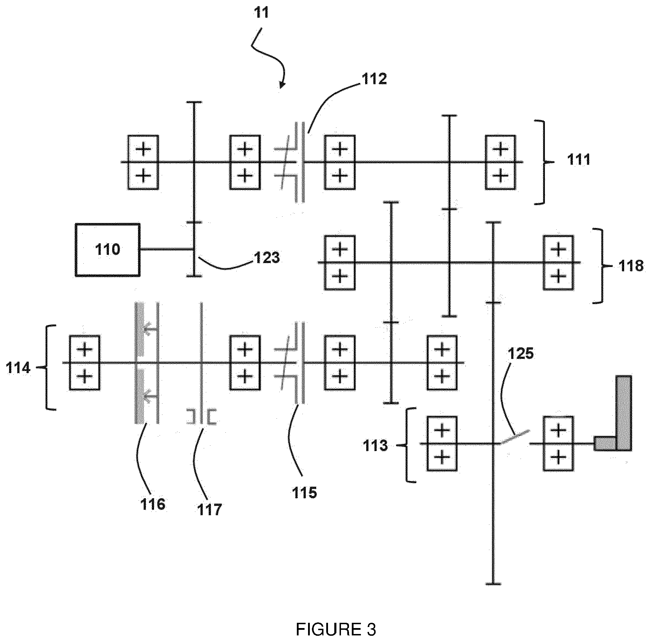

La figure 3 illustre de manière plus détaillée une partie de l'actionneur de commande mécanique de vol 11 (actionneur rotatif parallèle) comprenant une partie électromécanique avec moteur, des embrayages, des arbres, des roulements, des trains d'engrenages, un dispositif de friction et un dispositif d'amortissement.

La logique d'état de commande du dispositif d'embrayage d'entrée 112 et du dispositif d'embrayage d'assistance de secours 115 est la suivante :
- Dans un état d'initialisation, le dispositif d'embrayage d'entrée 112 est inactif et le dispositif d'embrayage d'assistance de secours 115 est actif. Aucun courant n'est injecté dans les bobines des dispositifs d'embrayage.
- Dans un état nominal, le dispositif d'embrayage d'entrée 112 est actif et le dispositif d'embrayage d'assistance de secours 115 est inactif. Un courant nominal est injecté dans chaque bobine.
- Dans un étant erroné suite à la détection de panne par le dispositif de monitoring 120, ce dispositif de monitoring 120 commande le dispositif d'embrayage d'entrée 112 de façon à ce qu'il soit inactif et le dispositif d'embrayage d'assistance de secours 115 de façon à ce qu'il soit actif. Aucun courant/tension n'est appliqué sur les bobines des dispositifs d'embrayage 112, 115.

Pour l'ergonomie et la transition vers une fonction de secours en vol, la commutation entre le dispositif d'embrayage d'entrée 112 et le dispositif d'embrayage d'assistance de secours 115 est réalisée dans un temps court et avec une réactivité compatible des deux dispositifs. Préférentiellement, le temps de débrayage du dispositif d'embrayage d'entrée 112 est plus rapide (de l'ordre de 5 ms) que le temps d'embrayage du dispositif d'embrayage d'assistance de secours 115 (de l'ordre de 10 ms). L'amortissement sur l'arbre de l'unité passive peut jouer favorablement en cas d'embrayage d'assistance de secours 115 avec un arbre/transmission issu de la motorisation qui aurait transitoirement une vitesse établie ou une vitesse résiduelle après passivation par le dispositif de monitoring 120.

De plus, l'amortissement sur l'arbre d'assistance de secours 114 est améliorée en cas d'embrayage du dispositif d'embrayage d'assistance de secours 115 avec l'arbre d'entrée 111 qui aurait transitoirement une vitesse établie ou une vitesse résiduelle après passivation par le dispositif de monitoring 120.

On notera, également, que le dispositif de freinage 116 de l'arbre d'assistance de secours 114 comprend avantageusement un système de réglage du tarage des disques de frein 1161 en vue de ne pas surcharger le dispositif d'embrayage d'assistance de secours 115.

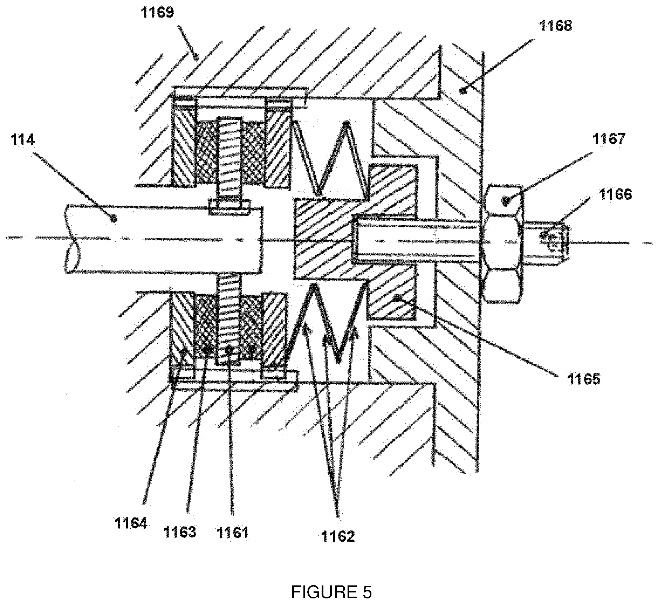

La figure 5 illustre une première variante dans laquelle le système de réglage est un système de réglage par vis. Cette figure 5 présente en outre une vue plus détaillée du dispositif de freinage 116.

Comme il a déjà été précisé, le dispositif de freinage 116 comprennent un disque 1161 et des rondelles ressort 1162. Ce dispositif de freinage 116 comprend en outre :
- des garnitures de friction 1163 ;
- un poussoir 1165 ;
- une vis 1166 ;
- un contre-écrou 1167.

Les garnitures de friction 1163 sont adaptées pour pincer le disque 1161 en vue de freiner sa rotation. Ce disque 1161 est lié en rotation avec le reste de l'arbre d'assistance de secours 114, il est cependant libre en translation, par exemple, via un clavetage. Dans une variante de réalisation où l'arbre d'assistance de secours 114 dispose d'un jeu axiale suffisant, le disque 1161 est fixé de manière rigide sur cet arbre d'assistance de secours 114. Les garnitures de friction 1163 sont collées sur des flasques 1164.

Le poussoir 1165 est adapté pour transmettre un effort de tarage de la vis 1166 aux rondelles ressorts 1162. La vis 1166 assure ainsi le tarage des rondelles ressorts 1162 et ajuste en conséquence le couple le patinage de l'ensemble de friction.

Le contre-écrou 1167 permet de bloquer la vis 1166 contre un couvercle 1168 de fermeture du mécanisme. Ce couvercle 1168 vient lui-même se positionner sur le bâti 1169. Ce bâti 1169 constitue un capot étanche. Il comprend également un joint CEM.

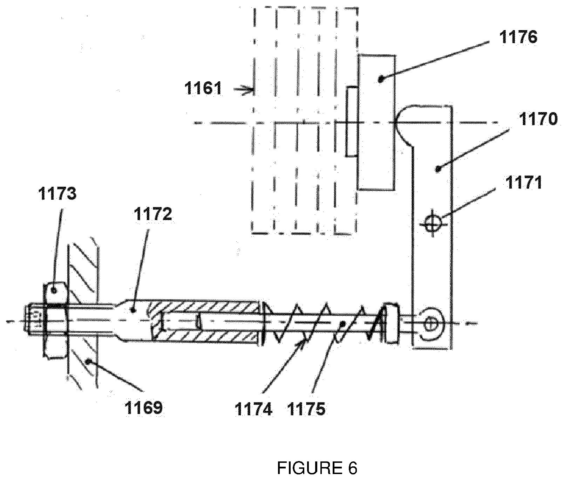

La figure 6 illustre une seconde variante dans laquelle le système de réglage comprend un dispositif de renvoi.

Le dispositif de renvoi comprend :
- un levier de renvoi 1170,
- un pivot 1171.

Le système de réglage comprend en outre :
- une vis 1172 ;
- un contre écrou 1173 ;
- un ressort 1174 ;
- une tige de poussée 1175 ;
- le disque 1161 ;
- un poussoir 1176.

La tige de poussée 1175 sert de guidage au ressort 1174 et elle transmet un effort au levier de renvoi 1170. Le ressort 1174 génère un effort de pression entre une garniture (non représentée) et le disque 1161. La poussée est transmise par la tige 1175, le levier de renvoi 1170 et le poussoir 1176.

Le levier de renvoi 1170 est mobile autour du pivot 1171. Ce pivot est lié au bâti 1169.

La vis 1172 assure le tarage du ressort 1174 et ajuste en conséquence le couple de patinage de l'ensemble de friction. Le contre-écrou 1173 permet de bloquer la vis 1172 contre le bâti 1169.

L'invention apporte ainsi les avantages suivants :
- une friction de secours activée automatiquement et uniquement en cas de perte du contrôle moteur, optimisant de ce fait la réversibilité et le retour tactile par contrôle moteur, nativement sécurisée en cas de perte d'alimentation ;
- une application sélective plus robuste et avec des caractéristiques fidèles à long terme ;
- une opportunité d'ajouter dans le dispositif commuté un amortissement ;
- une commutation dite « fail-safe » même en cas de perte d'alimentation du dispositif, avec un temps court ;
- une réduction de masse avec un dispositif plus compact ;
- une alternative à la solution de double-embrayage connue et disponible sur étagère par un dispositif intégré et miniaturisé de commutation à deux états et avec moins de pièces ;
- une opportunité de supprimer les dispositifs de friction montés dans la tringlerie ;
- la réalisation, en fonctionnement nominal, d'une friction programmable et d'un amortissement par contrôle de couple moteur, ce dispositif étant aisément configurable et sans contact ;
- une commutation sélective en interne sur une friction/amortissement de secours uniquement en cas de perte de contrôle moteur ;
- un impact négligeable sur la fonction principale de l'actionneur (absence de frictions localisées dans la tringlerie dues à la fonction de secours, celle-ci étant débrayée en fonctionnement nominal ;
- une haute intégrité et disponibilité ;
- des performances stables garanties dans le temps ;
- une disponibilité de l'unité passive élevée grâce à une application sélective ;
- un dispositif de friction/amortissement sécurisé conçu pour un « Smart Trim » actionneur à très haute intégrité.

L'invention permet de façon avantageuse, dans une évolution, d'envisager de coupler une seconde chaine de transmission/motorisation pour augmenter la disponibilité de l'actionneur dans une solution intégrée dans un seul boîtier actionneur.

## Revendications

1. Actionneur de commande mécanique de vol destiné à fournir une assistance à des moyens de pilotage (10) d'un aéronef, ledit actionneur de vol (11) comprenant :
- un moteur électrique (110) ;
- un arbre de sortie (113)
- un arbre d'entrée (111) adapté pour être mis en rotation par le moteur électrique (110), ledit arbre d'entrée (111) comprenant un dispositif d'embrayage d'entrée (112), ledit dispositif d'embrayage d'entrée (112) ayant une position active dans laquelle **il** est apte à coupler l'arbre d'entrée (111) avec un arbre de sortie (113) via un arbre intermédiaire (118) et une position inactive ;
- l'arbre de sortie (113) étant apte à être relié aux moyens de pilotage (10) de l'aéronef, ledit arbre de sortie (113) étant adapté pour être couplé avec l'arbre d'entrée (111) lorsque le dispositif d'embrayage d'entrée (112) est dans la position active ;
**caractérisé en ce que** ledit actionneur (11) comprend :
- un arbre d'assistance de secours (114), ledit arbre d'assistance de secours (114) étant adapté pour être couplé avec l'arbre de sortie (113) lorsque le dispositif d'embrayage d'entrée (112) est dans la position inactive, ledit arbre d'assistance (114) étant apte à freiner et/ou à amortir des mouvements de rotation de l'arbre de sortie (113), ledit arbre d'assistance de secours (114) n'étant pas apte à entraîner en rotation l'arbre de sortie (113).

2. Actionneur de commande selon la revendication 1, dans lequel l'arbre d'assistance de secours (114) comprend un dispositif d'embrayage d'assistance de secours (115), ledit dispositif d'embrayage d'assistance de secours (115) ayant une position active dans laquelle il permet de coupler l'arbre d'assistance de secours (114) avec l'arbre de sortie (113) et une position inactive et en ce que ledit dispositif d'embrayage d'assistance de secours (115) est dans la position active lorsque le dispositif d'embrayage d'entrée (112) est dans sa position inactive et ledit dispositif d'embrayage d'assistance de secours (114) est dans sa position inactive lorsque le dispositif d'embrayage d'entrée (112) est dans sa position active.

3. Actionneur de commande selon la revendication 2, dans lequel une défaillance du moteur électrique (110) rend inactif le dispositif d'embrayage d'entrée (112) et rend actif le dispositif d'embrayage d'assistance de secours (115).

4. Actionneur de commande selon la revendication 2 ou la revendication 3, dans lequel le dispositif d'embrayage d'entrée (112) et le dispositif d'embrayage d'assistance de secours (115) sont commandés électriquement.

5. Actionneur de commande selon l'une quelconque des revendications 1 à 4, dans lequel l'arbre d'assistance de secours (114) comprend un dispositif de freinage (116) et/ou un dispositif d'amortissement (117).

6. Actionneur de commande selon la revendication 5, dans lequel le dispositif de freinage (116) comprend un frein à friction à disque, ledit frein étant taré au moyen de rondelles ressort.

7. Actionneur de commande selon la revendication 6, dans lequel le dispositif de freinage (116) comprend un système de réglage du tarage des disques de frein.

8. Actionneur de commande selon la revendication 7, dans lequel le système de réglage est un système de réglage par vis.

9. Actionneur de commande selon la revendication 7, dans lequel le système de réglage comprend un dispositif de renvoi.

10. Actionneur de commande selon l'une quelconque des revendications 5 à 9, dans lequel le dispositif d'amortissement (117) comprend un amortisseur à courant de Foucault.

11. Actionneur de commande selon l'une quelconque des revendications 1 à 10, dans lequel l'arbre intermédiaire (118) est disposé entre l'arbre d'entrée (111), l'arbre d'assistance de secours (114) et l'arbre de sortie (113).

12. Actionneur de commande selon l'un quelconque des revendications 1 à11, ledit actionneur comprenant une double surveillance électronique et physique de rotation de l'arbre d'assistance de secours (114).

13. Système de contrôle de vol automatique d'un aéronef, le système comprenant un actionneur de commande mécanique de vol (11) selon l'une quelconque des revendications 1 à 11.

## Patentansprüche

1. Mechanische Flugsteuerungsbetätigungsvorrichtung zur Unterstützung von Antriebsmitteln (10) eines Luftfahrzeugs, wobei die Flugbetätigungsvorrichtung (11) umfasst:
- einen Elektromotor (110);
- eine Abtriebswelle (113)
- eine Eingangswelle (111), die dazu angepasst ist, vom Elektromotor (110) in Drehung versetzt zu werden, wobei die Eingangswelle (111) eine Eingangskupplungsvorrichtung (112) umfasst, wobei die Eingangskupplungsvorrichtung (112) eine aktive Position, in der sie zur Kopplung der Eingangswelle (111) mit einer Abtriebswelle (113) über eine Zwischenwelle (118) fähig ist, und eine inaktive Position aufweist;
- wobei die Abtriebswelle (113) zur Verbindung mit den Antriebsmitteln (10) des Luftfahrzeugs fähig ist, wobei die Abtriebswelle (113) angepasst ist, mit der Eingangswelle (111) gekoppelt zu werden, wenn sich die Eingangskupplungsvorrichtung (112) in der aktiven Position befindet;
**dadurch gekennzeichnet, dass** die Betätigungsvorrichtung (11) umfasst:
- eine Notunterstützungswelle (114), wobei die Notunterstützungswelle (114) angepasst ist, mit der Abtriebswelle (113) gekoppelt zu werden, wenn sich die Eingangskupplungsvorrichtung (112) in der inaktiven Position befindet, wobei die Unterstützungswelle (114) zur Bremsung und/oder Dämpfung von Drehbewegungen der Abtriebswelle (113) fähig ist, wobei die Notunterstützungswelle (114) nicht dazu fähig ist, die Abtriebswelle (113) in Drehung zu versetzen.

2. Steuerbetätigungsvorrichtung nach Anspruch 1, wobei die Notunterstützungswelle (114) eine Notunterstützungskupplungsvorrichtung (115) umfasst, wobei die Notunterstützungskupplungsvorrichtung (115) eine aktive Position, in der sie das Koppeln der Notunterstützungswelle (114) mit der Abtriebswelle (113) ermöglicht, und eine inaktive Position aufweist, und wobei die Notunterstützungskupplungsvorrichtung (115) sich in der aktiven Position befindet, wenn sich die Eingangskupplungsvorrichtung (112) in ihrer inaktiven Position befindet, und sich die Notunterstützungskupplungsvorrichtung (114) in ihrer inaktiven Position befindet, wenn sich die Eingangskupplungsvorrichtung (112) in ihrer aktiven Position befindet.

3. Steuerbetätigungsvorrichtung nach Anspruch 2, wobei ein Ausfall des Elektromotors (110) die Eingangskupplungseinrichtung (112) deaktiviert und die Notunterstützungskupplungseinrichtung (115) aktiviert.

4. Steuerbetätigungsvorrichtung nach Anspruch 2 oder Anspruch 3, wobei die Eingangskupplungseinrichtung (112) und die Notunterstützungskupplungseinrichtung (115) elektrisch angesteuert werden.

5. Steuerbetätigungsvorrichtung nach einem der Ansprüche 1 bis 4, wobei die Notunterstützungswelle (114) eine Bremsvorrichtung (116) und/oder eine Dämpfungsvorrichtung (117) umfasst.

6. Steuerbetätigungsvorrichtung nach Anspruch 5, wobei die Bremsvorrichtung (116) eine Scheibenreibungsbremse umfasst, wobei die Bremse mittels Federscheiben vorgespannt ist.

7. Steuerbetätigungsvorrichtung nach Anspruch 6, wobei die Bremsvorrichtung (116) ein System zur Regelung der Vorspannung der Bremsscheiben umfasst.

8. Steuerbetätigungsvorrichtung nach Anspruch 7, wobei das Regelungssystem ein Schraubregelungssystem ist.

9. Steuerbetätigungsvorrichtung nach Anspruch 7, wobei das Regelungssystem eine Umlenkvorrichtung umfasst.

10. Steuerbetätigungsvorrichtung nach einem der Ansprüche 5 bis 9, wobei die Dämpfungsvorrichtung (117) einen Wirbelstromdämpfer umfasst.

11. Steuerbetätigungsvorrichtung nach einem der Ansprüche 1 bis 10, wobei die Zwischenwelle (118) zwischen der Eingangswelle (111), der Notunterstützungswelle (114) und der Abtriebswelle (113) angeordnet ist.

12. Steuerbetätigungsvorrichtung nach einem der Ansprüche 1 bis 11, wobei die Betätigungsvorrichtung eine doppelte elektronische und physikalische Überwachung der Drehung der Notunterstützungswelle (114) umfasst.

13. Automatisches Flugsteuerungssystem für ein Luftfahrzeug, wobei das System eine mechanische Flugsteuerungsbetätigungsvorrichtung (11) nach einem der Ansprüche 1 bis 11 umfasst.

## Claims

1. Mechanical flight control actuator intended to provide assistance to piloting means (10) of an aircraft, said flight actuator (11) comprising:
- an electric motor (110),
- an output shaft (113);
- an input shaft (111) designed to be set in rotation by the electric motor (110), said input shaft (111) comprising an input clutch device (112), said input clutch device (112) having an active position in which it is able to couple the input shaft (111) to an output shaft (113) via an intermediate shaft (118), and an inactive position;
- the output shaft (113) being able to be connected to the piloting means (10) of the aircraft, said output shaft (113) being designed to be coupled to the input shaft (111) when the input clutch device (112) is in the active position;
**characterised in that** said actuator (11) comprises:
- a backup assistance shaft (114), said backup assistance shaft (114) being designed to be coupled to the output shaft (113) when the input clutch device (112) is in the inactive position, said assistance shaft (114) being capable of braking and/or of damping rotation movements of the output shaft (113), said backup assistance shaft (114) not being capable of rotating the output shaft (113).

2. Control actuator according to claim 1, wherein the backup assistance shaft (114) comprises a backup assistance clutch device (115), said backup assistance clutch device (115) having an active position in which it makes it possible to couple the backup assistance shaft (114) to the output shaft (113) and an inactive position, and in that said backup assistance clutch device (115) is in the active position when the input clutch device (112) is in its inactive position and said backup assistance clutch device (114) is in its inactive position when the input clutch device (112) is in its active position.

3. Control actuator according to claim 2, wherein a failure of the electric motor (110) makes the input clutch device (112) inactive and makes the backup assistance clutch device (115) active.

4. Control actuator according to claim 2 or claim 3, wherein the input clutch device (112) and the backup assistance clutch device (115) are electrically controlled.

5. Control actuator according to any one of claims 1 to 4, wherein the backup assistance shaft (114) comprises a braking device (116) and/or a damping device (117).

6. Control actuator according to claim 5, wherein the braking device (116) comprises a disc friction brake, said brake being tared by means of spring washers.

7. Control actuator according to claim 6, wherein the braking device (116) comprises a system for adjusting the taring the brake discs.

8. Control actuator according to claim 7, wherein the adjustment system is a screw adjustment system.

9. Control actuator according to claim 7, wherein the adjustment system comprises a return device.

10. Control actuator according to any one of claims 5 to 9, wherein the damping device (117) comprises an eddy current damper.

11. Control actuator according to any one of claims 1 to 10, wherein the intermediate shaft (118) is disposed between the input shaft (111), the backup assistance shaft (114) and the output shaft (113).

12. Control actuator according to any one of claims 1 to 11, said actuator comprising a dual electronic and physical surveillance, for rotating the backup assistance shaft (114).

13. Automatic flight control system of an aircraft, the system comprising a mechanical flight control actuator (11) according to any one of claims 1 to 11.
